# EUROPEAN PATENT APPLICATION

(11) **EP 4 665 067 A1**
(43) Date of publication of application: **17.12.2025**
(21) Application number: 24753603.0
(22) Date of filing: 06.02.2024
(51) Int. Cl.: H04W 74/08, H04W 74/00, H04B 7/024, H04W 84/12, H04W 52/14, H04W 24/08, H04L 1/18

(54) **SIGNALING METHOD AND DEVICE BASED ON MULTI-ACCESS POINT OPERATION IN WIRELESS LAN SYSTEM**

(30) Priority: 06.02.2023 KR 20230015760; 08.02.2023 KR 20230016918; 17.02.2023 KR 20230021620
(71) Applicant: LG Electronics Inc., Yeongdeungpo-gu Seoul 07336 (KR)
(72) Inventor: CHUN, Jinyoung, Seoul 06772 (KR); CHOI, Jinsoo, Seoul 06772 (KR); LIM, Dongguk, Seoul 06772 (KR); PARK, Eunsung, Seoul 06772 (KR); JANG, Insun, Seoul 06772 (KR)
(74) Representative: Jung, Minkyu
(86) International application number: PCT/KR2024/001733
(87) International publication number: WO 2024/167278

(57) **Abstract**

A method and a device for operating in a wireless LAN system arc disclosed. A method performed by a first STA in a wireless LAN system according to an embodiment of the present disclosure may comprise the steps of: receiving a first trigger frame from a first AP; and decoding the first trigger frame, wherein, on the basis that an ID related to a multi-AP operation is included in the first trigger frame and an ID of the first STA is not included therein, a network allocation vector (NAV) associated with the first trigger frame is not configured by the first STA, and the ID related to the multi-AP operation includes at least one of a basic service set ID (BSSID) of the first AP and an ID of a second AP participating in the multi-AP operation.

## Description

### [TECHNICAL FIELD]

The present disclosure relates to a communication operation in a Wireless Local Area Network (WLAN) system, and more specifically, to a signaling method and device based on multiple access point operation in a WLAN system.

### [BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.1 1ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

The technical problem of the present disclosure is to provide a method and device for signaling based on multiple access point (AP) operations in a wireless LAN system.

The technical problem of the present disclosure is to provide a method for triggering multiple AP operations by a representative AP in a wireless LAN system.

The technical problem of the present disclosure is to provide a method and device for setting TXOP (transmission opportunity), NAV (network allocation vector) setting, and UL (uplink) length related to multiple AP operations in a wireless LAN system.

The technical objects to be achieved by the present disclosure are not limited to the above-described technical objects, and other technical objects which are not described herein will be clearly understood by those skilled in the pertinent art from the following description.

### [Technical Solution]

According to one embodiment of the present disclosure, a method performed by a first station (STA) in a wireless LAN system may include receiving a first trigger frame from a first access point (AP); and decoding the first trigger frame, and based on the first trigger frame including an ID (identity) related to multi-AP operation and not including an ID of the first STA, a network allocation vector (NAV) associated with the first trigger frame may not be set by the first STA, and the ID related to the multi-AP operation may include at least one of a BSSID (basic service set ID) of the first AP or an ID of a second AP participating in the multi-AP operation.

According to another embodiment of the present disclosure, a method performed by the first access point (AP) in a wireless LAN system may include generating a first trigger frame; and transmitting the first trigger frame to a first station (STA), and based on the first trigger frame including an ID (identity) related to multi-AP operation and not including an ID of the first STA, a network allocation vector (NAV) associated with the first trigger frame may not be set by the first STA, and the ID related to the multi-AP operation may include at least one of a BSSID (basic service set ID) of the first AP or an ID of a second AP participating in the multi-AP operation.

### [Technical Effects]

According to various embodiments of the present disclosure, a method and device for signaling based on multi-access point (AP) operation in a wireless LAN system may be provided.

According to various embodiments of the present disclosure, a method for triggering multi-AP operation by a representative AP in a wireless LAN system may be provided.

According to various embodiments of the present disclosure, a method and device for setting TXOP, NAV setting, and UL length related to multi-AP operation in a wireless LAN system may be provided.

According to various embodiments of the present disclosure, more efficient resource utilization can be possible by triggering multi-AP operation.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 illustrates an exemplary format of a trigger frame to which the present disclosure can be applied.
FIG. 9 is a diagram for explaining an operation performed by a first AP according to an embodiment of the present disclosure.
FIG. 10 is a diagram for explaining an operation performed by a second AP according to an embodiment of the present disclosure.
FIG. 11 is a diagram for explaining a method for determining a UL length value in a multi-AP operation according to an embodiment of the present disclosure.
FIG. 12 is a diagram for explaining a procedure for performing a multi-AP operation according to an embodiment of the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

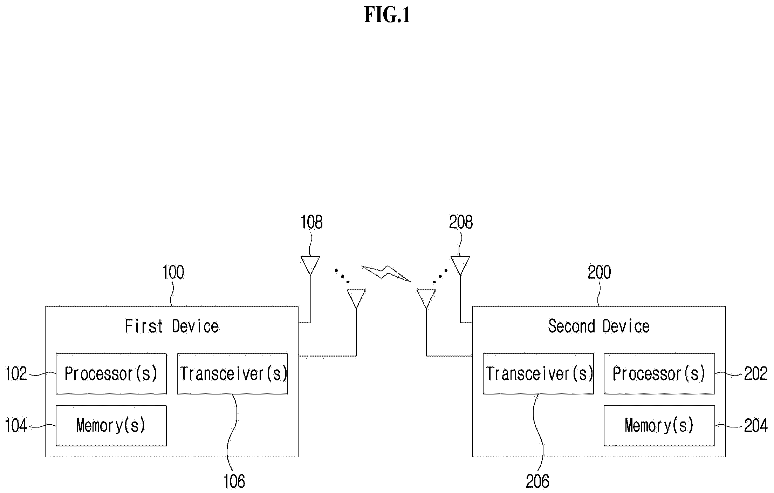

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

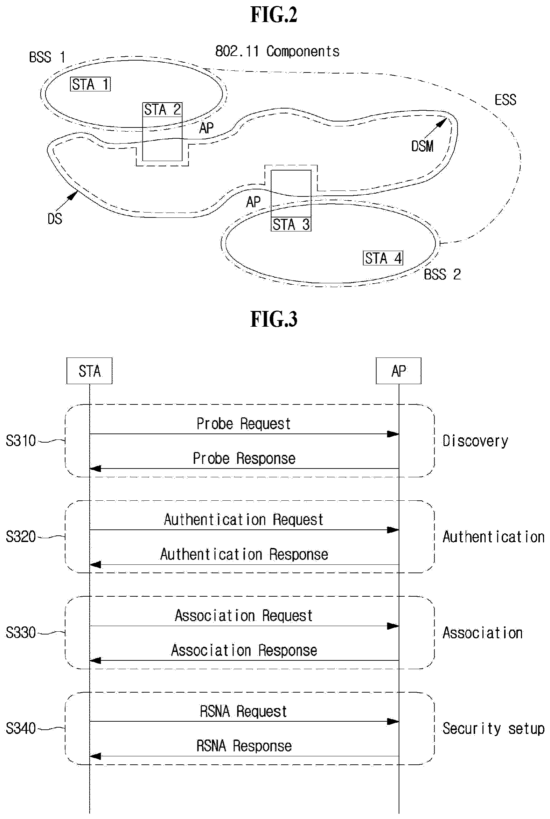

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

ADS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

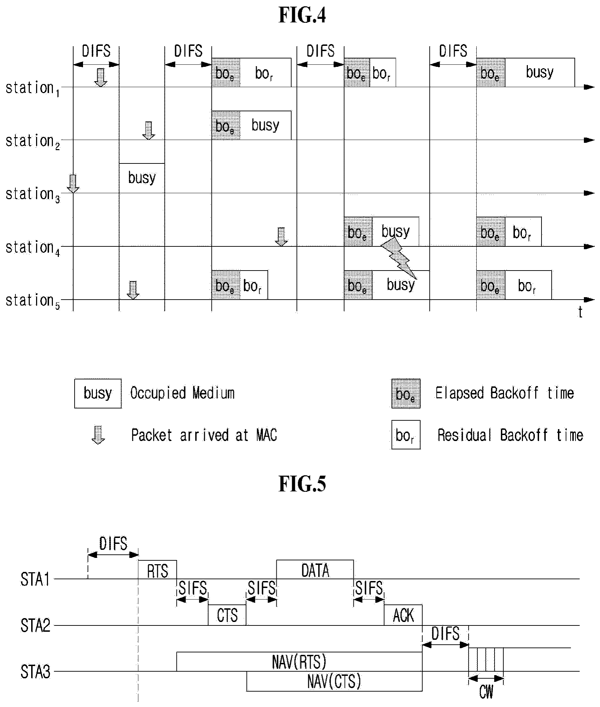

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

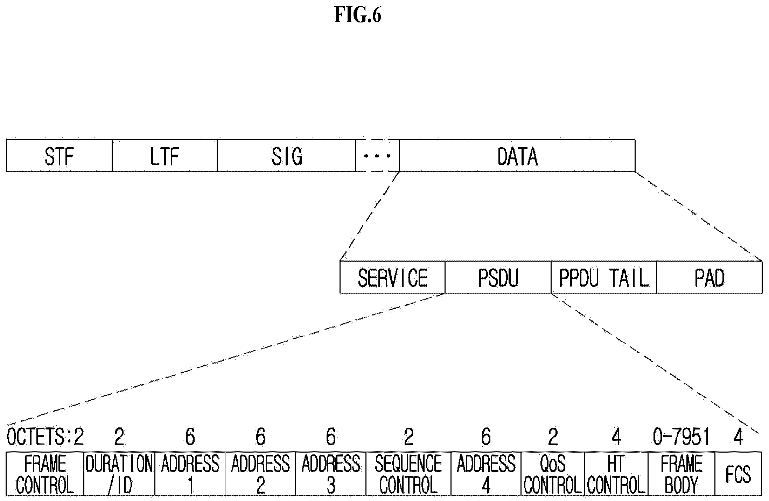

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

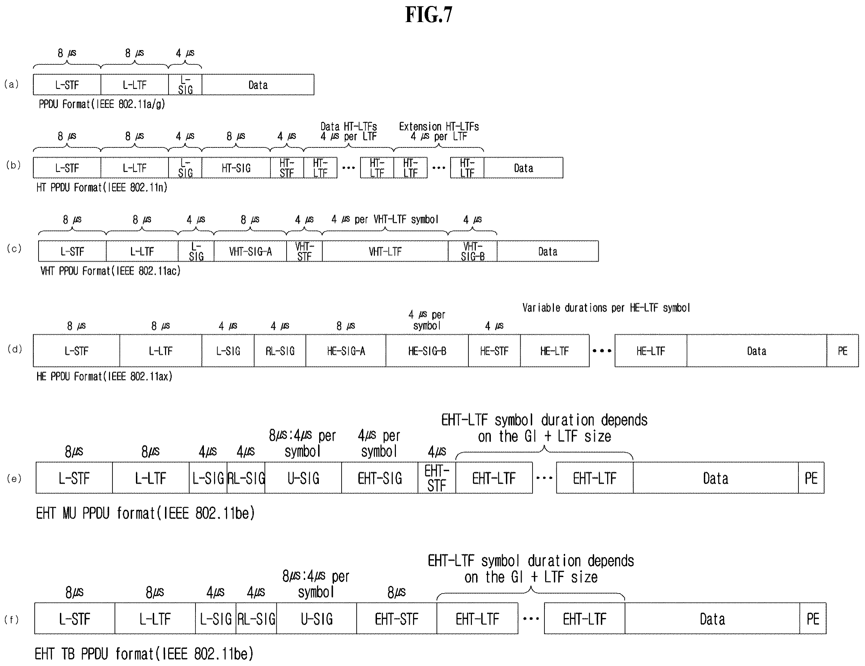

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

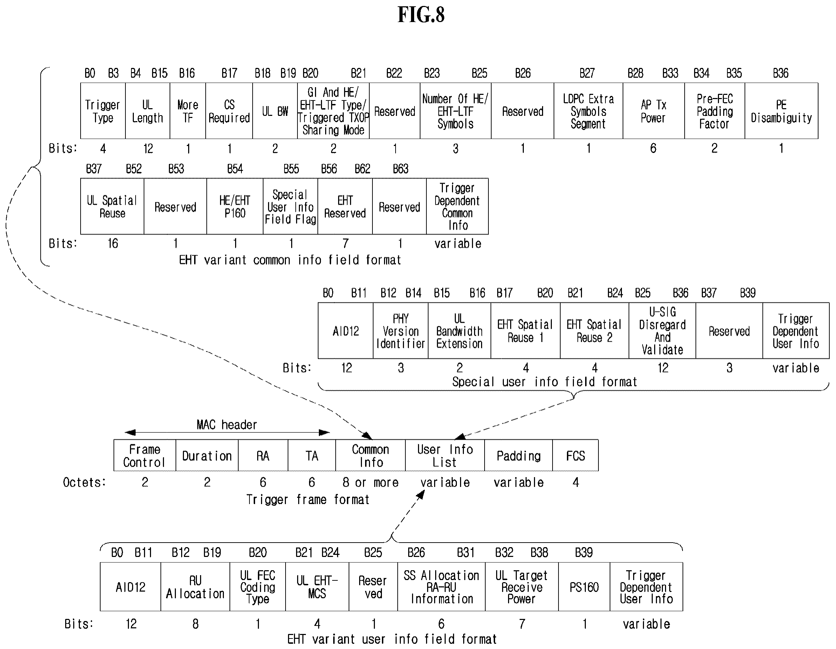

FIG. 8 is a diagram illustrating an example format of a trigger frame to which the present disclosure may be applied.

The trigger frame may allocate resources for transmission of one or more TB PPDUs and request transmission of TB PPDUs. The trigger frame may also include other information required by the STA, which transmits the TB PPDU in response. The trigger frame may include common information and user information list fields in the frame body.

The common info field is information commonly applied to the transmission of one or more TB PPDUs requested by a trigger frame, such as trigger type, UL length, presence or absence of a subsequent trigger frame (e.g., More TF), CS (channel sensing) request, UL BW (bandwidth), HE/EHT P160, special user info field flag, etc.

The 4-bit trigger type subfield may have values from 0 to 15. Among them, the values 0, 1, 2, 3, 4, 5, 6, and 7 of the trigger type subfield are defined to correspond to basic, BFRP (Beamforming Report Poll), MU-BAR (multi user-block acknowledgement request), MU-RTS (multi user-request to send), BSRP (Buffer Status Report Poll), GCR (groupcast with retries) MU-BAR, BQRP (Bandwidth Query Report Poll), and NFRP (NDP Feedback Report Poll), respectively, and the values 8 to 15 are defined as reserved.

Among the common information, the trigger dependent common info subfield may include information that is optionally included based on the trigger type.

A special user info field may be included in the trigger frame. The special user info field does not include user specific information, but includes extended common information that is not provided in the common info field.

The user info list includes zero or more user info fields. FIG. 8 illustrates an example of an EHT variant user info field format.

The AID12 subfield basically indicates that it is a user info field for the STA with the corresponding AID. In addition, if the AID12 field has a specific predetermined value, it may be used for other purposes, such as allocating a random access (RA)-RU or being configured as a special user info field. A special user info field is a user info field that does not include user-specific information but includes extended common information not provided in the common info field. For example, the special user info field may be identified by an AID12 value of 2007, and the special user info field flag subfield within the common info field may indicate whether the special user info field is included.

The RU allocation subfield may indicate the size and location of RU/MRU. For this purpose, the RU allocation subfield may be interpreted together with the PS160 (primary/secondary 160MHz) subfield of the user information field, the UL BW subfield of the common information field, etc.

### Multiple access point (MAP) operation

Hereinafter, examples of the present disclosure for multi-access point (MAP) operation are described.

MAP operation may be a general term for a technique in which multiple APs/STAs cooperate with each other to transmit and receive data when performing communication with other STA(s). The MAP operation may include a first method (i.e., multi-APs/STAs co-transmission method) in which multiple APs simultaneously transmit data to STA(s), and a second method (i.e., multi-APs/STAs coordination method) in which a suitable AP among multiple APs divides a suitable area (e.g., frequency/time/spatial area) and then transmits data to specific STA(s) (i.e., suitable STA(s)).

Specifically, the first method may include a method in which multi-APs/STAs perform a common transmission method to each STA (e.g., a coordinated spatial reuse (C-SR) method) and a method in which multi-APs/STAs perform joint transmission to the same STA(s) (e.g., a joint transmission (J-TX) method).

In the case of the C-SR scheme, multi-APs/STAs may share channel information (e.g., transmit power (Tx power), RSSI (Received Signal Strength Indicator), etc.) with STA(s), and may perform communication with STA(s) at the same time based on the channel information. In the case of the J-TX scheme, multi-APs/STAs may share channels and data, etc. with STA(s), and may perform communication with STA(s) at the same time based on the shared channel and data.

As described above, the second method refers to a method in which APs/STAs divide a frequency, time, or space domain and communicate with other STA(s) in the divided domain. The frequency domain-based communication method may include the C(concurrent)-OFDMA method, the time domain-based communication method may include AP selection, relay operation, the V(virtual)-BSS method, and the space domain-based communication method may include the C(coordinated)-BF(beamforming) method, and the like.

For example, in the case of a frequency domain-based communication method, multi-APs/STAs may share channel information according to frequency bands with STA(s), and select an appropriate frequency band based on the shared channel information. Multi-APs/STAs may perform communication with STA(s) in the selected frequency band.

As another example, in the case of a time domain-based communication method, the representative AP may be set to lead the communication by having the STA(s) select an appropriate AP/STA(s) (here, the representative AP is also included).

As another example, in the case of a space domain-based communication method, multi-APs/STAs may share channel information, etc. with STA(s), and calculate a BF matrix suitable for communication of each AP or that does not interfere with other APs. Multi-APs/STAs may perform communication with STA(s) based on the calculated BF matrix.

To support the MAP operation described above, the representative AP may select and indicate an AP/STA (hereinafter, participating AP/STA) for communication with a STA.

The representative AP (here, the representative AP can be replaced with a master AP, a Sharing AP, or a primary AP) initiates and controls MAP operations for transmission and reception between multiple APs. The representative AP groups participating APs and manages links with participating APs so that information can be shared between the participating APs. The representative AP manages information on BSSs comprised of participating APs and information on STAs associated with the BSS.

Participating APs (wherein, the participating AP can be replaced by a slave AP, a shared AP, a secondary AP, etc.) associate with a representative AP and can share control information, management information, and data traffic with each other. The participating AP performs the same basic functions of an AP that can establish a BSS in a wireless LAN.

In MAP operation, a participating STA may associate with a participating AP or a representative AP and form a BSS.

In a MAP environment, a representative AP and a participating AP may perform direct transmission and reception with each other. A representative AP and a STA may not perform direct transmission and reception with each other. A participating AP (e.g., a participating AP that has formed a bond with an STA) may perform direct transmission and reception with the STA. One of the participating APs may become a representative AP.

Here, the DL or UL procedure for MAP operation may be composed of 1) a step of directing/selecting participating AP(s) by a representative AP, 2) a step of transmitting DL data or DL trigger frames to STA(s) of the participating AP(s), 3) a step of transmitting ACK or UL data to the participating AP(s) by the receiving STA(s), and 4) a step of reporting the result to the representative AP of the participating AP(s).

Here, a step may be included between steps 1) and 2) in which the participating AP(s) transmit an ACK for the indication of the representative AP, and the representative AP transmits (re)scheduling indication information to the participating AP(s) that transmitted the ACK. Additionally, a step may be included between steps 3) and 4) in which the participating AP(s) transmit an ACK to the STA(s) when the UL procedure is performed.

Previously, the procedure and related protocol for triggering the DL/UL procedure for the above-described MAP operation for efficient resource utilization were not defined. Hereinafter, step 1) (i.e., the step where the representative AP triggers the MAP operation) of the DL/UL procedure for the above-described MAP operation will be specifically described.

In describing the present disclosure, the MAP DL trigger frame is expressed as MAD. The MAD may be configured based on the structure of the trigger frame illustrated in FIG. 8, or may be a trigger frame of a new trigger type defined for triggering a MAP operation. As another example, the MAD may be defined as a new control frame for the MAP operation.

The method in which MAP (i.e., transmission) is directly indicated to participating APs by the representative AP.

A representative AP may trigger DL PPDU transmission by transmitting MAD to participating AP(s).

As an example of the present disclosure, the MAD may include at least one of information indicating that the trigger frame indicates multi-AP operation, DL/UL indication information, TA/RA information, multi-AP type information, address information of participating AP(s), ID information of participating APs, length or transmission opportunity (TXOP) information, frequency band information, GI and LTF information, and Tx power information.

Specifically, the trigger frame may be indicated to trigger MAP (e.g., trigger DL PPDU transmission to STAs of participating APs or trigger frame transmission of participating AP(s)) by the trigger type field included in the common information field of the trigger frame. Here, the trigger type field value may be set to one of 9 to 15. Additionally or alternatively, MAD may be defined as a new control frame for triggering MAP.

The DL/UL indication information may indicate whether the MAD indicates DL transmission of the participating AP(s) or indicates trigger frame transmission of the participating AP(s). For example, if DL transmission of the participating AP(s) is indicated by the DL/UL indication information, the participating AP(s) may transmit DL PPDU to STA(s) based on the MAD. As another example, if trigger frame transmission of the participating AP(s) is indicated by the DL/UL indication information, the participating AP(s) may transmit trigger frame to STA(s) based on the MAD, and the STA(s) may transmit UL PPDU to the participating AP(s)/representative AP based on the received trigger frame.

The TA field of the MAD may be set to the address of the STA (i.e., the representative AP) transmitting the MAD. If there is one participating AP, the RA field of the MAD may be set to the address of the participating AP. If there is more than one participating AP, the RA field of the MAD may be set to a broadcast address. Additionally or alternatively, the MAD may include addresses of the participating AP(s) (e.g., BSSID, BSS color, or MAP group ID, etc.). That is, the MAD may include ID information of the participating APs, such as BSS color or BSS ID, rather than the existing STA ID (e.g., AID).

MAP type information may indicate at least one of MAP related methods such as J-TX, C-OFDMA, C-SR, and C-BF.

The length information included in the MAD may include the L-SIG length field value of the solicited DL PPDU(s) transmitted from the participating AP(s). The TXOP information included in the MAD may include information related to the TXOP through which the participating AP(s) transmit the DL PPDU(s). The frequency band information included in the MAD may include the entire band or/and the frequency band (BW or RU allocation information) of the PPDU of each participating AP(s).

GI and LTF information included in MAD may include GI, LTF type and symbol count information of PPDU transmitted from each participating AP(s). GI and LTF information for each participating AP may be commonly set, but is not limited thereto. GI and LTF information may be set for each participating AP.

The Tx power information included in the MAD may include the TX power information of the representative AP or the Tx power information of each participating AP(s).

### Method of indicating MAP operation duration to participating APs by representative AP

The representative AP may indicate the MAP duration(i.e., transmission duration or/and mid-term) to the participating AP(s). For example, the representative AP may indicate the MAP duration to the participating AP(s) via a MU-RTS (request to send) TXS (transmission opportunity sharing) frame.

In a basic wireless LAN system, the MU-RTS TXS trigger frame may include a triggered TXOP sharing mode subfield. When the triggered TXOP sharing mode subfield value is set to 1 or 2, it may indicate a TXOP duration between a scheduled STA and an associated AP or another STA.

In one embodiment of the present disclosure, in order to indicate TXOP related information for a MAP operation, a triggered TXOP shared mode subfield value may be set to 1 or 2. As another example, a triggered TXOP shared mode subfield (i.e., a triggered TXOP shared mode subfield with a value of 3) may be newly defined to indicate information related to TXOP for a MAP operation (e.g., TXOP interval, TXOP allocation method, etc.).

The MU-RTS TXS trigger frame may include one or more user information fields. The one or more user information fields of the MU-RTS TXS trigger frame may include at least one of information about participating AP(s) (e.g., BSSID or BSS color of participating AP(s) instead of existing AID), an RU allocation subfield, a PS160 subfield, an allocation duration subfield, information related to a MAP operation type, or a group ID for a MAP operation.

As an example of the present disclosure, when the MAP operation type indicates C-TDMA, the representative AP may sequentially allocate a portion of a TXOP to each participating AP(s). For example, the MU-RTS TXS trigger frame may allocate a portion of a TXOP to one participating AP(s). Here, the additional (More) TF (trigger frame) subfield of the common information field of the MU-RTS TXS trigger frame may indicate that transmission of a subsequent trigger frame is scheduled. The TXOP portion may be allocated to another participating AP(s) through the next MU-RTS TXS trigger frame indicated by the More TF subfield.

As another example of the present disclosure, when the MAP operation type indicates C-OFDMA, the representative AP may commonly allocate (part of) a period of TXOP to all participating AP(s). For example, one MU-RTS TXS trigger frame may include multiple user information fields, and may include ID information and frequency domain information of the participating AP(s) for each user information field. In this case, the allocated duration value included in each user information field may be the same.

As another example of the present disclosure, if the MAP operation type indicates C-SR (spatial reuse), the representative AP may commonly allocate (part of) a period of the TXOP to all participating AP(s). For example, one MU-RTS TXS trigger frame may include multiple user information fields, and each user information field may include ID information of the participating AP(s) and recommended TX power information or/and modulation and coding scheme (MCS). In this case, the frequency domain information and the allocated duration value included in each user information field may be the same.

### Method for setting UL length, TXOP, and allocation duration of MAD trigger frame and/or MU-RTS TXS trigger frame

MAD and/or MU-RTS TXS trigger frames for MAP operation are frames that trigger data transmission of participating APs, and thus, a hidden-node problem different from the existing one may exist.

For example, the UL length field included in the common information field of the trigger frame of a basic wireless LAN system may indicate the length of the L-SIG field of a TB PPDU. If an ACK frame is required according to the instruction of the UL length field, the AP may transmit the ACK frame, etc.

However, in the case of MAP operation, the ACK frame for the DL PPDU of the participating AP(s) according to the MAD and/or MU-RTS TXS trigger frame is transmitted from the STA(s), and the representative AP and other STA(s) associated (i.e., connected) with the representative AP may not receive the ACK frame.

Here, the representative AP may perform DL transmission after determining that there is no ACK related signal for the DL PPDU. In addition, when the participating AP(s) collects ACK frames from the STA(s) and transmits an ACK report frame after SIFS, the STA(s) associated with the representative AP that cannot receive the signal of the participating AP can transmit their own signals.

To solve the above-described problem, a method of setting the UL length, TXOP, and allocation duration through MAD and MU-RTS TXS trigger frames for MAP operation is described.

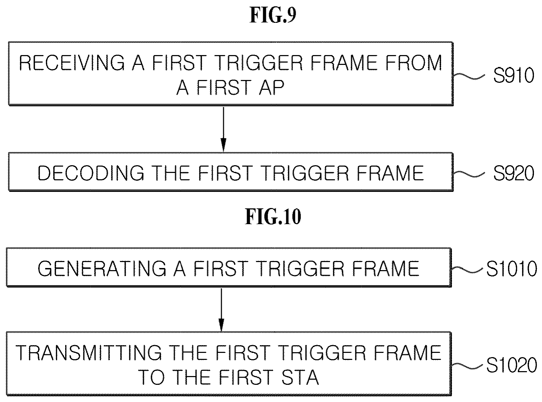

FIG. 9 is a diagram for explaining an operation performed by a first STA according to an embodiment of the present disclosure. In FIG. 9 and FIG. 10, a first AP may be a representative AP that triggers a multi-AP operation, and a second AP may be a participating AP that participates in the multi-AP operation. In addition, a first STA may collectively refer to an STA associated with a BSS of the second AP (i.e., associated with the second AP).

The first STA may receive a first trigger frame from a first access point (AP) (S910).

The first STA may belong to the BSS of the second AP participating in the multi-AP operation (i.e., the first STA is associated with the second AP), and may collectively refer to a non-AP STA that can receive a trigger frame of the first AP among at least one STA participating in the multi-AP operation.

Here, it is assumed that the trigger frame transmitted from the first AP to the first STA includes an ID related to the multi-AP operation (e.g., at least one of the BSSID (basic service set ID) of the first AP or the ID of the second AP participating in the multi-AP operation) and does not include an ID of the first STA (e.g., the STA ID of the first STA, etc.).

The first STA may decode the first trigger frame (S920). As described above, even if the ID of the first STA is not included in the first trigger frame, the first STA may not set or ignore a network allocation vector (NAV) associated with the first trigger frame (i.e., a NAV set via the duration/ID subfield of the first trigger frame).

As another example of the present disclosure, the first trigger frame may include information indicating whether to ignore a NAV setting associated with the first trigger frame. That is, the first trigger frame may include a specific subfield indicating information indicating whether to ignore a NAV setting, and the first STA may determine whether to ignore a NAV associated with the first trigger frame based on the specific subfield.

As another example, a specific subfield may be included to indicate information indicating whether to ignore a NAV setting on a DL PPDU (e.g., a second trigger frame, etc.) transmitted from a second AP to a first STA after receiving a first trigger frame from the first AP. The first STA may determine whether to ignore a NAV associated with the first trigger frame based on the specific subfield.

Additionally, the first AP may transmit a multi-user (MU) request-to-send (RTS) transmission opportunity sharing (TXS) trigger frame to the second AP.

For example, the first trigger frame may be indicated for TXOP allocation related to the multi-AP operation by the triggered transmission opportunity (TXOP) sharing mode subfield included in the MU-RTS TXS trigger frame. In this case, the triggered transmission opportunity sharing mode subfield value may be set to 3, but is not limited thereto.

The MU-RTS TXS trigger frame may include information indicating a multi-AP operation type and information related to the multi-AP operation type. For example, the information indicating the multi-AP operation type may indicate at least one of C(coordinated)-TDMA (time division multiple access), C(coordinated)-OFDMA (orthogonal frequency division multiplexing), C(coordinated)-SR (spatial reuse), J-TX (joint transmission), or C(coordinated)-BF (beamforming).

In addition, the MU-RTS TXS trigger frame may include an allocation duration subfield for allocating a time period for communication of the second AP within the TXOP associated with multi-AP operation.

For example, within a time period for communication of the second AP (i.e., a time period indicated by the allocation interval subfield), an operation of transmitting a DL PPDU from the second AP to the first STA, an operation of transmitting an ACK frame for the DL PPDU from the first STA to the second AP, and an operation of transmitting a report frame from the second AP to the first AP may be performed.

Here, the report frame may include information indicating whether transmission and reception operations between the second AP and the first STA have been completed.

As another example of the present disclosure, a trigger frame transmitted from a first AP to a second AP (e.g., the MU-RTS TXS trigger frame and/or MAD described above) includes a UL length field, and a specific value may be indicated by the UL length field.

Here, the specific value may be determined based on at least one of the length of the L(legacy)-SIG(signal) field of the DL PPDU transmitted from the second AP to the first STA, the length of the ACK frame of the DL PPDU transmitted from the first STA to the second AP, and the length of the report frame transmitted from the second AP to the first AP.

As another example, the specific value may be determined based on at least one of a length of an L-SIG field of a trigger frame transmitted from the second AP to the first STA, a length of a UL TB (trigger based) PPDU transmitted from the first STA to the second AP, a length of an ACK frame transmitted from the second AP to the first STA, and a length of a report frame transmitted from the second AP to the first AP.

Here, a specific length value may be added as xIFS (e.g. SIFS or PIFS) added between each frame.

The method performed by the first STA described in the example of FIG. 9 can be performed by the first device (100) of FIG. 1. For example, one or more processors (102) of the first device (100) of FIG. 1 can receive a first trigger frame from a first AP through one or more transceivers (106). The one or more processors (102) can decode the first trigger frame.

The above memory (104) can store instructions for performing the method described in the example of FIG. 9 when executed by one or more processors (102).

FIG. 10 is a drawing for explaining an operation performed by a first AP according to one embodiment of the present disclosure.

The first AP may generate a first trigger frame (S1010). Here, the first AP may generate a first trigger frame for the first STA that belongs to a participating AP participating in a multi-AP operation and can receive a trigger frame from a representative AP.

The configuration of the first trigger frame has been described with reference to Fig. 9, so any duplicate description will be omitted.

The first AP may transmit the generated first trigger frame to at least one STA including the first STA (S1010).

As described above, based on the fact that the first trigger frame includes an ID related to multi-AP operation and does not include an ID of the first STA, a network allocation vector (NAV) associated with the first trigger frame may not be set by the first STA.

Additionally, as described above, the first AP may transmit the MU-RTS TXS trigger frame to the second AP, which is a participating AP, and multi-AP operation can be performed based on the MU-RTS TXS trigger frame. The first AP may transmit the MU-RTS TXS trigger frame to the second AP before or after transmitting the first trigger frame. The configuration of the MU-RTS TXS trigger frame and the operation related thereto have been described with reference to FIG. 9, and therefore, a redundant description will be omitted.

The method performed by the first AP described in the example of FIG. 10 may be performed by the second device (200) of FIG. 1. For example, one or more processors (202) of the second device (200) of FIG. 10 may generate a trigger frame. The one or more processors (202) may transmit the trigger frame to the first STA through one or more transceivers (206).

Furthermore, one or more memories (204) of the second device (200) may store instructions for performing the method described in the example of FIG. 10 when executed by one or more processors (202).

The following describes how to set the UL length, TXOP (transmission opportunity), and duration through MAD and/or MU RTS TXS trigger frames to trigger MAP operation.

### Embodiment 1

Embodiment 1 relates to the UL length field of the MAD and/or MU-RTS TXS trigger frame for MAP operation.

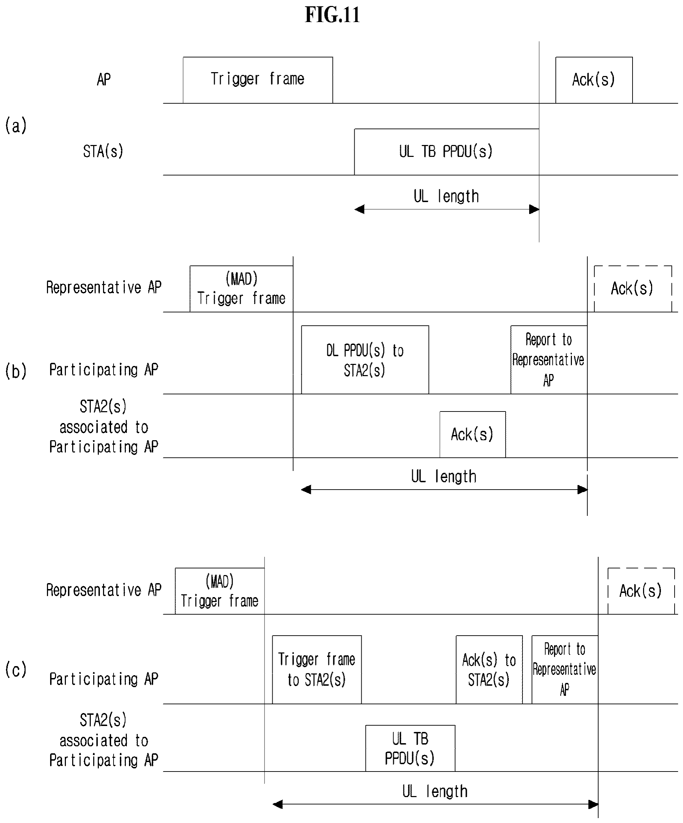

As illustrated in (a) of FIG. 11, the UL length indicated by the UL length field included in the common information field of the trigger frame illustrated in FIG. 8 can be set based on the UL TB PPDU transmitted from the STA(s) by the corresponding trigger frame.

Meanwhile, the UL length indicated by the UL length field of the common information field of the MAD and/or MU-RTS TXS trigger frame can be set based on the DL PPDU of the participating AP and the transmission PPDU of the STA(s) transmitted subsequent to the corresponding trigger frame.

As another example, the UL length may be set based on i) the end of transmission/reception of the participating AP and its STA(s) or ii) a frame reporting the result from the participating AP to the representative AP after the transmission/reception of the STA(s) is finished.

For example, as illustrated in (b) of FIG. 11, when a participating AP transmits DL data to STA(s), the corresponding UL length may be set to "L-SIG length of DL PPDU(s)" + SIFS + "length of ACK frame(s)" (+ SIFS + "length of report frame transmitted to representative AP").

For example, the L-SIG length of DL PPDU(s) may be set to the same value as the corresponding UL length. In this case, the L-SIG length may be set to "the length excluding the L (legacy) part of the DL PPDU" + SIFS + "the length of the ACK frame (etc.)" (+ SIFS + "the length of the report frame transmitted to the representative AP").

As another example, as illustrated in (c) of FIG. 11, when a participating AP triggers UL data to STA(s), the corresponding UL length may be set to "L-SIG length of DL trigger frame to STA(s)" + SIFS + "Length of UL TB PPDU(s) transmitted from STA(s)" (+ SIFS + "Length of ACK frame transmitted to STA(s)" + SIFS + "Length of report frame transmitted to representative AP").

Here, if RA or DA is different (for example, if it is possible to configure an A-MPDU composed of multiple MPDUs), the "ACK frame transmitted to STA(s)" and the "report frame transmitted to the representative AP" can be transmitted through one PPDU. Therefore, the "length of the ACK frame transmitted to STA(s)" + SIFS + "length of the report frame transmitted to the representative AP" can be replaced with the length of one PPDU.

Here, the UL length field described above may be changed to another name (e.g., multi-AP transmission length field, etc.). And, the length field setting method described above may also be applied when setting the MAC section of the trigger frame. As another example, the MAC section may additionally include the length value of the authorization message from the representative AP.

As an example of the present disclosure, in the case of an MU-RTS TXS trigger frame, one or more DL PPDUs may be transmitted sequentially, and the corresponding UL length may be set based on the length of the DL PPDU(s) transmitted after the MU-RTS TXS trigger frame and the length of the ACK frame(s) therefor.

And, when the MAP operation is performed, the triggered TXOP shared mode subfield value included in the MU-RTS TXS trigger frame may be set to 3, and the UL length field (or multi-AP transmission length field) described above may be included in the MU-RTS TXS trigger frame. However, this is only one embodiment, and the triggered TXOP shared mode subfield value included in the MU-RTS TXS trigger frame may also be set to 1 or 2.

### Embodiment 2

Embodiment 2 relates to a time duration allocated to participating AP(s) through an MU-RTS TXS trigger frame for MAP operation.

The user information field of the MU-RTS TXS trigger frame for MAP operation may include an allocation duration subfield, and the allocation duration subfield may indicate a time duration allocated to the participating AP(s) within the TXOP acquired by the representative AP.

As an example of the present disclosure, the allocation duration subfield included in the user information field of the MU-RTS TXS trigger frame may indicate each time duration allocated to the participating AP(s) or the total time duration allocated to the participating AP(s). For example, when the C-OFDMA scheme is applied, the participating AP(s) may share the same time duration, and when the C-TDMA scheme is applied, the time duration may be sequentially allocated to the participating AP(s).

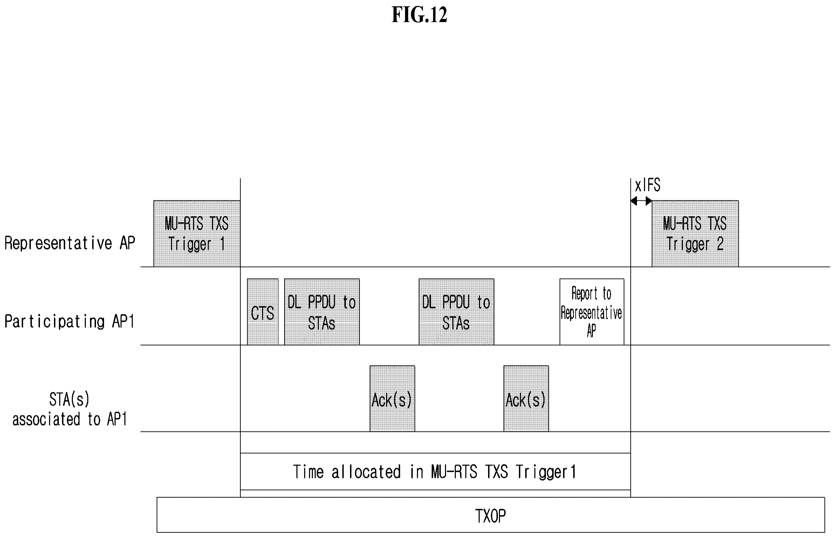

As an example of the present disclosure, as illustrated in FIG. 12, the time duration may be set/allocated as the time duration from the time after the TXS trigger frame is transmitted to the time duration when the report frame is transmitted to the representative AP. As another example, if the time duration is sequentially allocated to each participating AP(s), the time duration may be set/allocated as the time period from the time when the DL PPDU of each participating AP is transmitted to the time period when the report frame is transmitted to the representative AP.

The representative AP may not be able to receive communications between the participating AP and the STA(s) belonging to the participating AP (in particular, UL transmissions of the STA(s)), so ultimately a reporting operation of the participating AP to the representative AP may be required.

The report frame transmitted by the participating AP to the representative AP as illustrated in FIG. 12 may include ACK information of each STA(s) and/or MAP operation completion information of the participating AP. As an example, the report frame may be transmitted to the AP after SIFS after each DL PPDU and ACK frame is transmitted. As another example, the report frame may be transmitted to the representative AP after SIFS after all transmissions of DL PPDU(s) and ACK frame(s) of a specific AP are completed.

As an example of the present disclosure, as illustrated in FIG. 12, MU-RTS TXS trigger frame 1 may include a user information field for participating AP 1. And, the user information field may set "time allocated via MU-RTS TXS trigger 1."

After the MU-RTS TXS trigger frame 1 is transmitted, the participating AP 1 may transmit a CTS response frame to the representative AP. Then, the participating AP 1 may transmit a DL PPDU to STA(s) within its BSS, and receive an ACK response frame from the corresponding STA(s) (if necessary).

Unlike the MU-RTS TXS trigger frame of the basic wireless LAN system, when STA(s) transmit an ACK frame to the participating AP, the representative AP may not confirm the ACK frame. Accordingly, since it cannot confirm whether the transmission of the participating AP 1 is finished, the representative AP may wait even if the data transmission is completed before the time allocated through the MU-RTS TXS trigger 1. At this time, since other APs/STAs may attempt transmission, it may be necessary for the participating AP 1 to transmit a report frame to the representative AP.

That is, the participating AP 1 may transmit a report frame including information indicating that the transmission operation is completed and/or (if necessary) information indicating successful transmission to the STA, to the representative AP. The format of the frame transmitted by the participating AP 1 to the representative AP may include an ACK frame and/or a (MU) BA frame. The ACK frame may include information indicating successful transmission and/or completion of transmission. The BA frame may include information about the STA(s) that have successfully transmitted and/or transmission completion report information. When the C-OFDMA scheme is applied, the MU BA frame may be utilized for simultaneous reporting by the participating AP(s).

The representative AP may receive the above report frame and trigger transmission of other participating APs after xIFS (e.g., SIFS or PIFS) or terminate the MAP operation and perform other transmission operations.

For example, if the report frame is transmitted at the end of each transmission of a DL PPDU (and/or an ACK frame), PIFS may be utilized since the representative AP cannot determine that the transmission of the participating AP is complete. As another example, if the report frame is transmitted only when the entire transmission of the participating AP is complete, SIFS may be utilized since the representative AP can determine that the transmission of the participating AP is complete (i.e., the report frame is transmitted and another frame is transmitted after SIFS).

That is, the participating AP(s) may always secure time to report to the representative AP and transmit frames during MAP communication within the allocated TXOP.

### Embodiment 3

Embodiment 3 relates to a method for setting a network allocation vector (NAV) related to a trigger frame of a representative AP for MAP operation during MAP operation. As a NAP setting method, Embodiment 3-1 or Embodiment 3-2 described below may be applied, or Embodiment 3-1 and Embodiment 3-2 may be applied.

Here, NAV is a mechanism used to prevent collisions between STAs and manage wireless access, and may mean a timer indicating a time period of a channel reserved after transmission of other STA(s) (i.e., a time period waiting for the channel to transition from a busy state to an idle state).

The STA may perform NAV setting after obtaining NAV information from the duration/ID field of a frame transmitted by other STA(s) (for example, when the RA of the received frame is not its own). In this case, the STA may only arbitrarily set the channel to a busy state and continue to receive frames.

### Embodiment 3-1

When a MAP operation is performed, at least one STA that belongs to a participating AP and may receive a trigger frame of a representative AP among the STA(s) participating in the MAP operation may not perform NAV setting (i.e., ignore the NAV) even if its ID is not included in the trigger frame.

For example, if the transmission BSSID of the trigger frame is the BSSID of the representative AP, as described above, the at least one STA may not perform NAV setting. In this case, the at least one STA may check the BSSID information of the representative AP for its MAP operation in advance.

As another example, if the content of the trigger frame includes an ID of a participating AP to which at least one STA belongs, the at least one STA may not perform NAV setting as described above. This operation may be performed if i) the capability of the AMP operation of the at least one STA(s) and ii) the type of MAP operation to be performed through the trigger frame or MAP group information, etc. match each other.

As another example, if a DL/UL procedure for MAP operation includes a step in which participating AP(s) transmit an ACK for an indication of a representative AP and the representative AP transmits (re)scheduling indication information to the participating AP(s) to which the ACK was transmitted, the operation described above (i.e., the NAV setting related operation according to embodiment 3-1) may be performed with a frame indicating the (re)scheduling indication information. As another example, the operation described above may be performed through frames of all representative APs used for the MAP operation.

Here, a collision with another OBSS (overlapping basic service set) frame may occur due to ignoring the NAV of at least one STA.

### Embodiment 3-2

When the MAP operation is performed, STA(s) that belong to a participating AP and can receive a trigger frame of a representative AP among the STA(s) participating in the MAP operation may perform NAV setting once if their ID is not included in the trigger frame. Here, the STA(s) may not transmit UL data if a DL frame (e.g., a trigger frame) is transmitted from the participating AP to which they belong and CCA (clear channel assessment) is required.

To address this, a DL PPDU (e.g., a trigger frame, etc.) for a MAP operation transmitted from a participating AP may include a specific subfield indicating whether to ignore the NAV setting. For example, if the specific subfield value is set to "true", an STA that receives the corresponding trigger frame may ignore the set NAV (i.e., set NAV = 0"). Here, the specific subfield value may be set to at least one of the reserved bits of the trigger frame (e.g., the reserved bits of the trigger frame illustrated in FIG. 8).

That is, if the STA(s) do not receive a trigger frame that does not include its ID from the representative AP, the STA(s) may perform NAV setting once and decide whether to ignore the NAV setting through a specific subfield of the DL PPDU (e.g., trigger frame) received from the participating AP.

Additionally or alternatively, the representative AP may indicate to the STA(s) that the participating AP has transmitted a DL frame via a DL PPDU (e.g., a trigger frame) for MAP operation. For example, a subfield indicating that the participating AP has transmitted a DL frame included in the corresponding DL PPDU (e.g., a trigger frame, etc.) may be set to at least one of the reserved bits of the corresponding DL PPDU (e.g., a trigger frame, etc.) (e.g., a reserved bit of the trigger frame illustrated in FIG. 8). If the value of the corresponding subfield is set to "true", an STA that has received the corresponding DL PPDU (e.g., a trigger frame, etc.) may ignore the set NAV (i.e., set "NAV = 0").

Additionally, when receiving a DL frame (e.g., a trigger frame) from a non-associated AP other than the participating AP associated with the STA, the STA may update the preset NAV.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

The method proposed in this disclosure has been described with a focus on examples applied to IEEE 802.11-based systems, but can be applied to various wireless LANs or wireless communication systems in addition to IEEE 802.11-based systems.

## Claims

1. A method performed by a first station (STA) in a wireless LAN system, the method comprising:
receiving a first trigger frame from a first access point (AP); and
decoding the first trigger frame,
wherein based on the first trigger frame including an ID (identity) related to multi-AP operation and not including an ID of the first STA, a network allocation vector (NAV) associated with the first trigger frame is not set by the first STA, and
wherein the ID related to the multi-AP operation includes at least one of a BSSID (basic service set ID) of the first AP or an ID of a second AP participating in the multi-AP operation.

2. The method of claim 1, wherein:
a multi-user (MU) request-to-send (RTS) transmission opportunity sharing (TXS) trigger frame is transmitted from the first AP to the second AP, and
a triggered transmission opportunity (TXOP) sharing mode subfield included in the MU-RTS TXS trigger frame indicates that the first trigger frame is for TXOP allocation related to the multi-AP operation.

3. The method of claim 2, wherein:
the first STA is associated with a BSS (basic service set) of the second AP, and
the MU-RTS TXS trigger frame includes an allocation duration subfield for allocating a time duration for communication of the second AP within a TXOP related to the multi-AP operation.

4. The method of claim 3, wherein:
within a time duration for communication of the second AP, an operation of transmitting a downlink (DL) physical layer protocol data unit (PPDU) from the second AP to the first STA, an operation of transmitting an ACK (acknowledge) frame for the DL PPDU from the first STA to the second AP, and an operation of transmitting a report frame from the second AP to the first AP are performed.

5. The method of claim 4, wherein:
the report frame includes information indicating whether transmission and reception operations between the second AP and the first STA have been completed.

6. The method of claim 1, wherein:
a specific value is indicated by an uplink (UL) length field of a trigger frame transmitted from the first AP to the second AP, and
the specific value is determined based on at least one of a length of an L(legacy)-SIG(signal) field of a DL PPDU transmitted from the second AP to the first STA, a length of an ACK frame of the DL PPDU transmitted from the first STA to the second AP, and a length of a report frame transmitted from the second AP to the first AP.

7. The method of claim 1, wherein:
a specific value is indicated by a UL length field of a trigger frame transmitted from the first AP to the second AP, and
the specific value is determined based on at least one of a length of an L-SIG field of a trigger frame transmitted from the second AP to the first STA, a length of a UL TB (trigger based) PPDU transmitted from the first STA to the second AP, a length of an ACK frame transmitted from the second AP to the first STA, and a length of a report frame transmitted from the second AP to the first AP.

8. The method of claim 1, wherein:
the first trigger frame includes information indicating whether to ignore the NAV setting associated with the first trigger frame.

9. The method of claim 1, wherein:
the first AP is a representative AP that triggers the multi-AP operation, and
the second AP is a participating AP that participates in the multi-AP operation.

10. The method of claim 2, wherein:
the MU-RTS TXS trigger frame includes information indicating a multi-AP operation type and information related to the multi-AP operation type, and
at least one of C(coordinated)-TDMA(time division multiple access), C(coordinated)-OFDMA(orthogonal frequency division multiplexing), C(coordinated)-SR(spatial reuse), J-TX(joint transmission) or C(coordinated)-BF(beamforming) is indicated by the information indicating the multi-AP operation type.

11. A first station (STA) operating in a wireless LAN system, the first STA comprising:
at least one transceiver; and
at least one processor coupled to the at least one transceiver,
wherein the at least one processor is configured to:
receive, through the at least one transceiver, a first trigger frame from a first access point (AP); and
decode the first trigger frame,
wherein based on the first trigger frame including an ID (identity) related to multi-AP operation and not including an ID of the first STA, a network allocation vector (NAV) associated with the first trigger frame is not set by the first STA, and
wherein the ID related to the multi-AP operation includes at least one of a BSSID (basic service set ID) of the first AP or an ID of a second AP participating in the multi-AP operation.

12. A method performed by a first access point (AP) in a wireless LAN system, the method comprising:
generating a first trigger frame; and
transmitting the first trigger frame to a first station (STA),
wherein based on the first trigger frame including an ID (identity) related to multi-AP operation and not including an ID of the first STA, a network allocation vector (NAV) associated with the first trigger frame is not set by the first STA, and
wherein the ID related to the multi-AP operation includes at least one of a BSSID (basic service set ID) of the first AP or an ID of a second AP participating in the multi-AP operation.

13. A first access point (AP) operating in a wireless LAN system, the first AP comprising:
at least one transceiver; and
at least one processor coupled to the at least one transceiver,
wherein the at least one processor is configured to:
generate a first trigger frame; and
transmit the first trigger frame to a first station (STA),
wherein based on the first trigger frame including an ID (identity) related to multi-AP operation and not including an ID of the first STA, a network allocation vector (NAV) associated with the first trigger frame is not set by the first STA, and
wherein the ID related to the multi-AP operation includes at least one of a BSSID (basic service set ID) of the first AP or an ID of a second AP participating in the multi-AP operation.

14. A processing apparatus configured to control a first station operated (STA) in a wireless LAN system, the processing apparatus comprising:
at least one processor; and
at least one computer memory operably connected to the at least one processor and storing instructions that, based on being executed by the at least one processor, perform operations comprising:
receiving a first trigger frame from a first access point (AP); and
decoding the first trigger frame,
wherein based on the first trigger frame including an ID (identity) related to multi-AP operation and not including an ID of the first STA, a network allocation vector (NAV) associated with the first trigger frame is not set by the first STA, and
wherein the ID related to the multi-AP operation includes at least one of a BSSID (basic service set ID) of the first AP or an ID of a second AP participating in the multi-AP operation.

15. At least one non-transitory computer-readable medium storing at least one instruction,
wherein the at least one instruction executable by at least one processor controls a device in a wireless LAN system to:
receive a first trigger frame from a first access point (AP); and
decode the first trigger frame,
wherein based on the first trigger frame including an ID (identity) related to multi-AP operation and not including an ID of the first STA, a network allocation vector (NAV) associated with the first trigger frame is not set by the first STA, and
wherein the ID related to the multi-AP operation includes at least one of a BSSID (basic service set ID) of the first AP or an ID of a second AP participating in the multi-AP operation.
